Europäisches Patentamt

European Patent Office

Office européen des brevets

(11) Publication number: **0 160 008 B1**

# EUROPEAN PATENT SPECIFICATION
## published in accordance with Art. 158(3) EPC

(45) Date of publication of patent specification: **07.08.91**

(51) Int. Cl.⁵: **G06K 7/10, G06K 7/14, G06K 19/14, G11B 7/013, G11B 7/08**

(21) Application number: **84903524.1**

(22) Date of filing: **14.09.84**

(86) International application number:
**PCT/US84/01463**

(87) International publication number:
**WO 85/01818 (25.04.85 85/10)**

(54) **QUAD DENSITY OPTICAL DATA SYSTEM.**

(30) Priority: **12.10.83 US 541166**

(43) Date of publication of application:
**06.11.85 Bulletin 85/45**

(45) Publication of the grant of the patent:
**07.08.91 Bulletin 91/32**

(84) Designated Contracting States:
**DE FR GB SE**

(56) References cited:
| | |
|---|---|
| **FR-A- 2 174 027** | **US-A- 3 699 518** |
| **US-A- 3 919 697** | **US-A- 3 921 136** |
| **US-A- 4 105 926** | **US-A- 4 213 038** |
| **US-A- 4 360 728** | **US-A- 4 395 628** |
| **US-A- 4 411 016** | |

**IBM JOURNAL OF RESEARCH & DEVELOPMENT, September 1977, pages 479-483; J.M. FLEISCHER et al.: "Laser-optical system of the IBM 3800 printer"**

(73) Proprietor: **DREXLER TECHNOLOGY CORPORATION**
**3960 Fabian Way**
**Palo Alto, CA 94304(US)**

(72) Inventor: **PIERCE, Gerald, A.**
**1028 Eden Bower Lane**
**Redwood City, CA 94061(US)**
Inventor: **BUXTON, James, L.**
**2080 Ralmar Avenue**
**East Palo Alto, CA 94303(US)**

(74) Representative: **Kahler, Kurt, Dipl.-Ing.**
**Postfach 1249 Gerberstrasse 3**
**W-8948 Mindelheim(DE)**

## Description

The invention relates to a optical data card read system according to the precharacterizing part of patent claim 1.

In US-A-4,360,728 a banking card is disclosed suitable for use with automatic teller machines (ATMs). The patent describes a card having optical data written by a laser which forms pits in the medium. The data is arranged in parallel data paths of a single line of spaced pits. The medium itself is described as a thin metallic recording layer made of reflective metal. Types of reflective recording material suitable for use in such cards are described in US-A-4,269,917; 4,304,848 and 4,363,870. This material is characterized by reflective silver particles in a gelatin matrix. The silver particles form a reflective field which may be modified by a laser writing or, in some instances, by photographic prerecording of information. Since the material described in the patents is based upon silver-halide emulsions, exposure of data patterns and subsequent developing of the patterns leads to recording of data in a manner similar to laser writing. In either case, data is represented by spots or pits in a reflective field. Reflective spots in an absorptive field would also work.

In many optical data recording and retrieval systems, data has been recorded in linear tracks, analogous to magnetic recording. Data is read by following tracks, usually by means of servo systems. In US-A-3,919,697 parallel data tracks are disclosed. In each track data is arranged in groups of data spots. Separating groups of data spots within a track are gaps and track identifying zones. Data and track identification information are distinguished by some difference in the spots used, such as size, shape, color, etc.

In US-A-3,921,136 an apparatus is disclosed for recognizing alphanumeric characters. The apparatus comprises a single line of photosensitive detectors which scans the characters to normalize and recognize them.

Some lengthwise compression of data has been achieved in both magnetic and optical systems by means of clever modulation schemes, such as FM and MFM. Using such techniques, errors are reduced, while at the same time data bits may be mor closely spaced. In US-A-3,920,957 an optical data modulation scheme is disclosed for bar code which eliminates space in isolating individual bits of data. The elimination of such space between adjacent bits can double the density of recorded bits in the lengthwise direction.

An object of the present invention was to devise a means for formatting optically recorded data for a data card, or the like, in a way that increases data density, while at the same time minimizes error.

The data card read system of the invention is characterized by the features of patent claim 1. A data card adapted to be used with this system is characterized by the features of patent claim 5 and methods for operating the system of the invention are characterized in claim 6 to 8.

In principle, the invention provides an optical data storage and retrieval system which formats data on a strip or optical recording material which may be cut and mounted on a wallet-size card or rolled on spools like tape. Data, in the form of pre-recorded spots having a diameter of a few microns, is disposed in cells disposed in two directions, such that the cells resemble spaces in a regularly spaced grid.

The optical medium is read by moving it relative to an optical detecting array such as a linear CCD array, aligned perpendicular to the direction of lengthwise card motion. A plurality of linear CCD detector cells image each data in a row of such cells. Data spots in specified data cell positions can be sensed by the detector cells.

Since the linear CCD array is perpendicular to the direction of motion, there is no need for "track following" in the traditional sense. Data spots are disposed in positions, termed cells, which are rows and columns of a regular grid. Each transverse row of cells is usually read more than one time and these cells must be in alignment with the linear detector array. Since the entirety of a row is read almost simultaneously, a new error checking scheme is possible. For example, cells at opposite edges of a row may always have spots, or specified spot patterns. Each row of cells contains a discrete set of cells which collectively make up usable data. This row can be called a "track." Each row is read out by the CCD array in parallel with a single scan of the contents of the CCD. The image of the "track" is smaller than the total view of the CCD array. This allows electronic tracking to be accomplished with no motion of the card or the electronics.

The card can be moved in (1) an incremental fashion, where the card or optics is stepped to each new row and the data is recovered, or (2) a uniform motion where the electronics reads rows of data until a high quality read is found. The electronics can detect a new row of data by special marks on the ends of the row.

The size of the spots is such that a plurality of detector cells can image each spot. Information from all of the cells imaging a single spot may be correlated for determining the presence or absence of a spot. Such correlation is helpful because spots may not be centered in a cell or may not have a geometrically optimal shape.

The optical data storage and retrieval system has application in wallet-size cards which may be used in security systems for access or in other applications where prerecorded information and a small card or token is useful. The reading of rows of data, rather than columns, allows close lateral and lengthwise packing of data. Since no buffering spaces are needed either in rows or columns, quad density recording is possible by eliminating space buffering in both rows and columns.

Brief Description of the Drawings

Fig. 1 is a front plan view of an optical data storage and retrieval system in accord with the present invention.

Fig. 2 is a frontal blow up view of a data strip having optically readable digital data thereon.

Fig. 3 is a plan view of data spots arranged in cells in accord with the present invention.

Fig. 4 is a detail of detector cells aligned for reading data spots in accord with the present invention.

Fig. 5 is a plan view of data spots in a central band and neighboring bands, with a CCD array spanning the central band and portions of the neighboring bands.

Fig. 6 is a block diagram of optical, mechanical and electrical components of a data strip reader mechanism in accord with the present invention.

Best Mode for Carrying Out the Invention

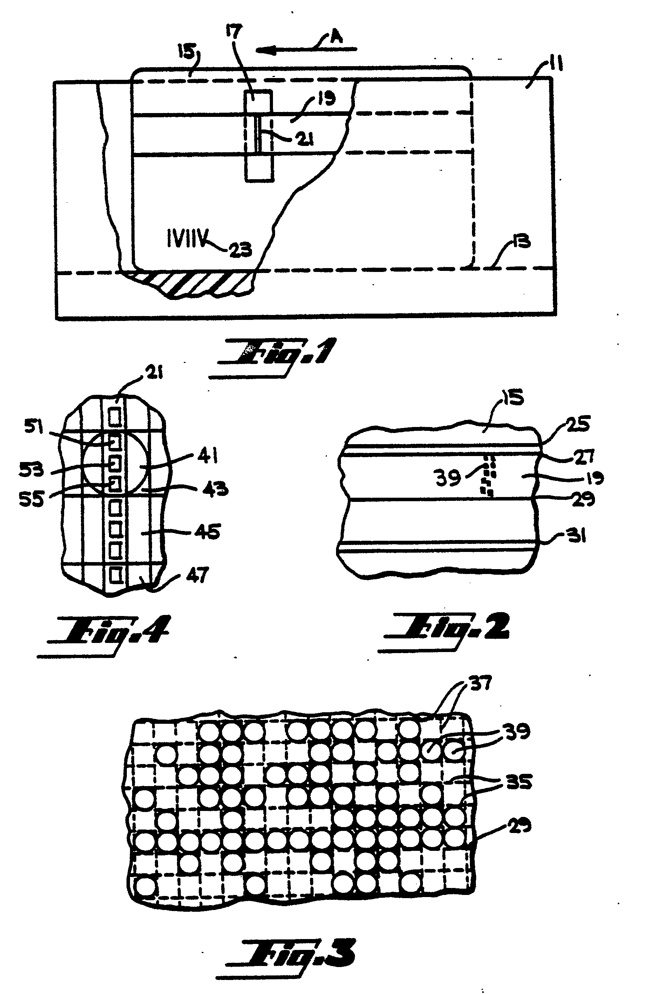

With reference to Fig. 1, a card transport 11 is shown. The transport includes a rail 13 which supports a card 15, such as a credit card. The transport 11 includes a readout head 17 mounted for scanning a strip 19 carried by card 15. Strip 19 is an optical recording or storage medium, preferably of the type previously mentioned in U.S. patents 4,269,917; 4,304,848 and 4,363,870. Other types of reflective or transmissive material, which can support pre-encoded data, formed by laser or other optical techniques, can be used.

The readout head 17 holds a linear CCD array 21. The linear array has a line of detectors which laterally spans at least one row of data on strip 19 at a time. Card 15 may have other indicia thereon, such as alphanumeric indicia 23 serving as eye-readable identification information. As the card is moved in the direction shown by the arrow A, by an automatic card advancing mechanism, strip 19 moves past the readout head 17 so that the strip 19 passes beneath the linear detector array 21. This allows microscopic data spots on the strip to pass beneath the readout head 17.

Fig. 2 shows a detail of the strip. The card 15 has a strip edge 25 a few millimeters from the upper edge of the card. The optical data strip spans the length of the card, similar to a magnetic data strip on a credit card. Inward from edge 25 is a first data area or band between parallel lines 27 and 29. A second data area or band exists between lines 29 and 31. The second data area or band is approximately the same size as the first. The lines 27, 29 and 31 are dark, straight, parallel, spaced apart lines which assist in playback of information. Any number of such data areas may be disposed on a data strip, depending upon its width. The width of each data area is governed by the size and number of cells disposed across the area. At least one row in one band passes beneath the readout head. In the case of multiple, parallel bands, the detector array overlaps bands, as described below. A small quantity of spots 39 is shown. Here, the spots are disposed in two rows across the first data recording area. The spots are microscopic in size, typically have a dimension greater than 3 microns, with the preferred dimension being about 10 microns, and a range of dimensions for an edge or diameter being between 1 to 35 microns.

The data spots and their positions may be seen in Fig. 3. The dashed horizontal lines 35 and the dashed vertical lines 37 are imaginary, serving to indicate cells wherein data is written either photographically or by means of a laser. The cells are generally square, although this is not necessary. Within the cells, spots 39 may be present or absent. The field in which the spots appear is reflective. The presence of a spot diminishes the reflectivity of the field to an extent that a detector can detect diminished reflectivity and produce a corresponding signal. Previously described line 29 is seen defining the edge of a recording area.

The spots need not be round, as shown, but may have any regular shape, such as square. There is no required number of cells in a row and no required numbers of columns of cells between spaced apart parallel lines. However, the number of cells in each row is preferably equal. Preferably, the spots are positioned such that they touch each other when adjacent, i.e. contiguous, in lateral and lengthwise directions.

One of the advantages of the aforementioned laser recording and data storage material which is made from a silver-halide emulsion is that photographic prerecording of data spots is possible. For example, U.S. patent, 4,304,848 describes a process in which data is replicated onto the material prior to achieving a reflective state. First, an unexposed silver-halide emulsion is exposed through an opaque master having data to be recorded on the medium and then the exposed areas are developed black, but not fixed. Next, the surface of the remaining silver-halide emulsion is fogged to create silver precipitating nuclei. Finally, the now-fogged medium is exposed to a monobath which slightly chemically develops the emulsion and solubilizes silver halide into silver complexes and transports soluble silver complexes by diffusion transfer to the silver precipitating nuclei where the silver is reduced on the nuclei, as in physical development, so as to create a reflective silver surface region. By this process, low reflectivity data spots appear in a reflective field. An inverse process could have been used such that the spots appear reflective, against a dark field. The microscopic data spots may be photographically pre-recorded or may be formed by laser writing. For this reason, the size of the microscopic spots is approximately equal to the diameter of a sharply focussed laser beam.

Fig. 4 shows a linear detector array 21 passing over a portion of a grid having the data spot 41 within data cell 43. Data cells 45 and 47 are empty, as well as the other data cells which are pictured.

The linear detector array 21 has a plurality of detectors 51, 53, 55 disposed for sensing light reflected from each cell. In this case, three detectors observe cell 43 and in the process detect spot 41. Since the detectors are CCD devices, the detector output is sensed by shifting charge levels from one end of the linear array to the other. The charge levels are measured in terms of voltages, with a high amount of reflectivity defined as the highest or lowest voltage condition and the lowest amount of reflectivity defined as the opposite voltage condition. A threshold level is defined between the maxima and the output from the number of detectors observing one cell can be polled to determine whether or not a spot existed within a cell. For example, if two of three detectors have voltage levels indicative of a spot, then presence of the spot is assigned to that particular cell. However, if only one detector cell indicates a spot, the cell is determined to be empty and the single detector reporting a spot is believed to have detected foreign material within the cell.

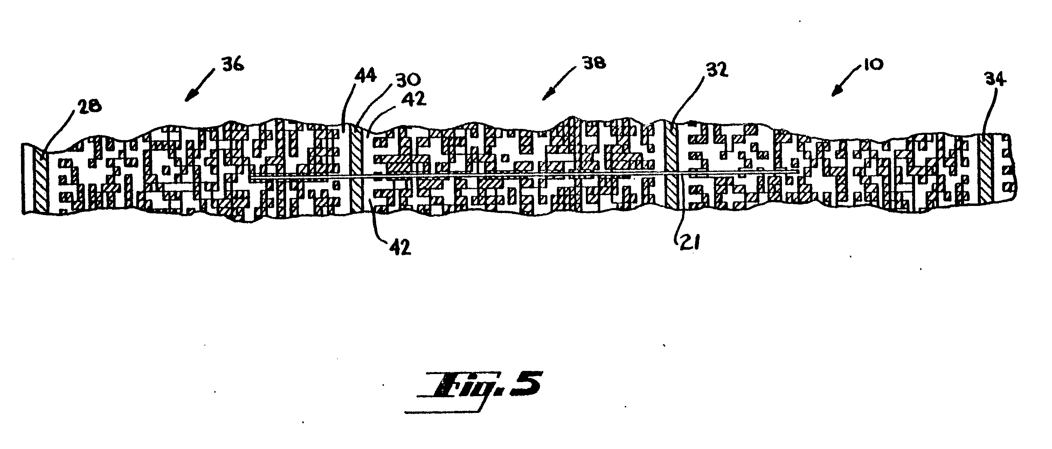

With reference to Fig. 5, a portion of a data card is shown with three adjacent bands of data spots including central band 38 and neighboring bands 36 and 10. Band 36 is between parallel lines 28 and 30. Band 38 is between parallel lines 30 and 32. Band 10 is between parallel lines 32 and 34. Each band of data has 46 data cells between the white columns immediately adjacent to the parallel lines on either side of a band. The linear detector array 21 has a total of 256 detector cells uniformly spaced along the array. In reading data the detector array is over-filled with more than one band. Approximately one-half of each neighboring band 36 and 10 is captured, as well as the entirety of the central band 38, which is primarily of interest. The linear detector array is read several times in the same location so that ambiguities may be resolved by comparing successive reads of the same row. This is described further below. The central band 38 may be followed electronically by identification of the parallel lines 30 and 32, each having white columns on either side of the line, such as the columns 42 and 44 and data bits forming track marks at the end of each row. The track marks may indicate track numbers so that the address of each track is established. Once a band is read, such as band 38, the card, or the optics disposed above the card may be moved so that the next band of data may be read. This constitutes electronic tracking of data with very fine separation of relevant data from other data or non-data areas of the card.

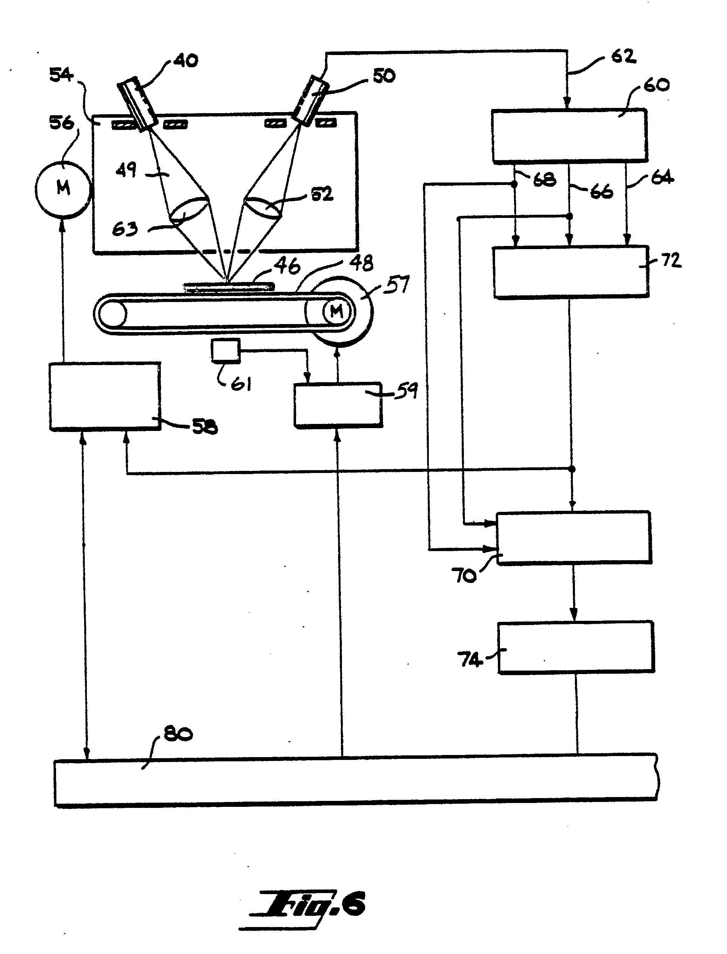

With reference to Fig. 6, an optical data storage medium 46 is shown to be supported on a belt 48 driven by a motor 57. The card is held firmly in place by guides, not shown, serving to locate edges of the card. Motor 57 may be a stepper motor under control of motor servo 59. The transport is capable of moving card 46 back and forth, with extreme positions of the transport signaled by optical limits which is 61, electrically connected to motor servo 59.

A beam source, such as a laser 40, generates a radiation beam 49 directed toward the data bands on card 46 by means of optics 63, typically a focusing lens. Light reflected from the card is directed toward a linear detector array 50 by means of a lens 52. Light source 40 and detector 50 are mounted on a movable support 54 which is driven by a motor 56. Light source 40 is a semiconductor laser operating at infrared wavelengths. The motor is a stepper motor which is controlled by a second motor servo 58. Both the first motor servo 59 and the second motor servo 58 are connected to a data bus 80 for computer control. The first servo 59 forces motor 57 to advance card 46 in a lengthwise direction so that successive rows of data may be read by the linear array 50. On the other hand, stepper motor 58 provides crosswise motion control so that various bands of data may be read.

The linear array 50 is able to read successive rows of data, asynchronously scanning the data, in a sense, as the data is shifted out of the linear array. The start of each scan is indicated by means of a start pulse. As previously mentioned, a CCD driver 60 receives incoming data bits along line 62 and produces a start pulse along line 64 once the start of data is recognized. Since the data is self-clocking, clock pulses may be generated from the data stream arriving on line 62 and these clock pulses are sent to other system components along line 66. Undecoded data is transmitted along line 68 to a data decoder circuit 70 having memory with various data patterns. Clock pulses provide timing marks so that data patterns may be recognized.

Data is also transferred to a reference line follower circuit 72 which recognizes the lines which mark the edges of each band. One of the data patterns to be decoded consists of track marks on the card. Such marks are embedded in each row which, as previously indicated, is termed a "track." Reference line information is transmitted from reference line follower 72 to decoder circuit 70 so that track marks can be located adjacent to the reference lines. The memory of the bit decoder 70 contains a map indicating where data should be expected. A counter in the bit decoder cooperates with the map in order to match the data stream along line 68 to decoded data bits.

The linear array 50 is clocked at a rate so that each row of data is read at least a few times before the optics moves on to the next row. Each scan from the linear array is tested to find out if it is a new track. If it is a new track, then the best previous pattern match from the previous track is transferred to the data bus. Other scans from the previous track are discarded. Each scan of the same track is compared to the previous best decoded track until the best data pattern for that row has been selected when the next row scan is initiated. The best row is measured by reading track marks at the end of each row. Each track also may be checked for parity. Decoded data is transmitted to a line buffer 74 which converts data to parallel bytes for transmission to bus 80. A computer is connected to the data bus for testing data as described above and for providing error correction. The computer also provides control for the motor servos 59 and 58 using known servo correction and feedback techniques.

As previously mentioned, each card carries dark, straight, parallel reference lines separating bands of data. After a band has been read, the second servo 58 positions the optics for reading the next band. Instead of moving the optics, the card could have been moved in the crosswise direction.

In the present invention, the motors 56 and 57 provide coarse positioning of the card so that the linear array can scan a row of cells, plus neighboring cells on either side of the row. The CCD array separates the row utilizing the track marks within each row and in this manner performs electronic tracking of the data. This may be considered to be fine tracking of the data which cooperates with the coarse tracking.

While the preferred embodiment has described a card having a strip of reflective material thereon, it will be realized that a continuous strip could be wound on hubs, like tape. Moreover, the material need not be reflective, particularly for tape, but could be transmissive. Transmissive material would be read by light passing through the material onto a detector array behind the material relative to the source. The material need not be a film material. Most types of laser data storage media can be used.

**Claims**

1. Optical data card read system including a data card (15) with parallel data paths on said data card, a card transport means (48,57) for moving the card in a first direction, a beam source means (40) for directing a radiation beam onto said data paths, a beam detector means (17;21;50) for reading said radiation beam after impingement with said card, and moving means (54,56) for advancing said data card relative to said beam source and said beam detector means in a second direction perpendicular to said first direction characterized in that contiguous rows of storage cells (35;43,45,47) are arranged on said data card (15) in parallel bands (10,36,38) extending in said first direction, said rows of storage cells extending perpendicular thereto in a rectangular array, that each storage cell (35;43,45,47) is capable of holding a single bit of data approximately of the size of a laser beam diameter, that each band of rows of storage cells (35;43,45,47) is separated from adjacent bands (10,36,38), that said beam detector means (17;21;50) comprises a linear array of detector cells (51,53,55) with the array having a length greater than a row of data and a width not greater than the width of a storage cell, that said beam detector means (17;21;50) images data in a row plus some data from rows in adjacent bands, and that each storage cell is imaged by more than one detector cell (51,53,55) such that the data bits contained in a row may be read simultaneously and contiguous rows may be read in succession.

2. System according to claim 1, characterized in that said parallel bands of data are separated by parallel, absorptive lines (30,32,34).

3. The system of claim 1 or 2, wherein each row of data cells has marks at opposed ends, identifying a row.

4. The system of any of claims 1, 2 or 3, characterized in that said linear array of detector cells is a CCD-device.

5. Optical data card (15) adapted to be used in an optical data card read system in particular that of any of the claims 1 to 4, having at least one longitudinally extending data path containing a plurality of storage cells provided on a substrate, characterized in that said storage cells are arranged contiguously in a rectangular array (Fig. 3), that some of the storage cells have data spots (39) therein of microscopic size, the remaining storage cells being empty, the storage cells forming tracks readable in a direction perpendicular to the longitudinal extension of said data path.

6. Data card (15) according to claim 5, characterized in that at least one end of each track has spots marking the presence of the track.

7. Method for reading optical data on a data card using the read system according to claim 3, characterized by reading storage cells of each row simultaneously and selecting the detected values of those storage cells only arranged between the spots marking the presence of said row.

8. Method according to claim 7, characterized in that each row is read several times and the readings are evaluated for most probable final result.

9. Method for reading optical data on a data card using the read system according to claim 2, characterized in that said absorptive lines (30,32,34) provide means for correcting skew by servo-tracking thereof.

**Revendications**

1. Système optique de lecture de cartes à données, comportant une carte à données (15) avec des chemins parallèles de données sur cette carte, un moyen de transport de cartes (48, 57) pour déplacer la carte dans une première direction, un moyen (40) constituant une source de faisceau pour diriger un faisceau de rayonnement sur les chemins de données, un moyen de détection de faisceau (17; 21; 50) pour lire le faisceau de rayonnement après sa rencontre avec la carte, ainsi qu'un moyen de déplacement (54, 56) pour avancer la carte à données par rapport à la source de faisceau et par rapport au moyen de détection de faisceau, dans une seconde direction perpendiculaire à la première direction, caractérisé en ce que des rangées contiguës de cellules de mémoire (35; 43, 45, 47) sont agencées sur la carte à données (15) en bandes parallèles (10, 36, 38) s'étendant dans la première direction, les rangées de cellules de mémoire ayant une orientation perpendiculaire à ces bandes dans un réseau rectangulaire, que chaque cellule de mémoire (35; 43, 45, 47) est capable de contenir un seul bit de donnée ayant approximativement la grosseur du diamètre d'un faisceau laser, que chaque bande de rangées de cellules de mémoire (35; 43, 45, 47) est séparée de bandes voisines (10, 36, 38), que le moyen de détection de faisceau (17; 21; 50) comprend un système linéaire de cellules de détection (51, 53, 55), système dont la longueur est supérieure à celle d'une rangée de données et dont la largeur ne dépasse pas la largeur d'une cellule de mémoire, que le moyen de détection de faisceau (17; 21; 50) capte l'image des données contenues dans une rangée plus quelques données de rangées de bandes voisines, et que l'image de chaque cellule de mémoire est captée par plus d'une cellule de détection (51, 53, 55), de sorte que les bits de données contenus dans une rangée peuvent être lus simultanément et que des rangées contiguës peuvent être lues l'une après l'autre.

2. Système selon la revendication 1, caractérisé en ce que les bandes parallèles de données sont séparées par des lignes parallèles absorbantes (30, 32, 34).

3. Système selon la revendication 1 ou 2, dans lequel chaque rangée de cellules de données comporte, aux extrémités opposées, des marques identifiant la rangée.

4. Système selon l'une quelconque des revendications 1, 2 ou 3, caractérisé en ce que le système linéaire de cellules de détection est un dispositif à couplage de charge.

5. Carte à données optiques (15) adaptée pour être utilisée dans un système optique de lecture de cartes à données, en particulier dans le système selon l'une quelconque des revendications 1 à 4, possédant au moins un chemin de données s'étendant longitudinalement et contenant une pluralité de cellules de mémoire formées sur un substrat, caractérisée en ce que les cellules de mémoire sont agencées de façon contiguë · dans un réseau rectangulaire (Fig. 3), que quelques-unes des cellules de mémoire contiennent des points de données (39) de grosseur microscopique, les cellules de mémoire restantes étant vides, les cellules de mémoire formant des pistes pouvant être lues suivant une direction perpendiculaire à l'étendue longitudinale du chemin de données.

6. Carte à données (15) selon la revendication 5, caractérisée en ce qu'au moins une extrémité de chaque piste comporte des points marquant la présence de la piste.

7. Procédé pour lire des données optiques sur une carte à données en utilisant le système de lecture selon la revendication 3, caractérisé en ce qu'il comprend la lecture simultanée de cellules de mémoire de chaque rangée et la sélection des valeurs détectées des seules cellules de mémoire disposées entre les points marquant la présence de ladite rangée.

8. Procédé selon la revendication 7, caractérisé en ce que chaque rangée est lue plusieurs fois et les lectures sont évaluées pour obtenir le résultat final le plus probable.

9. Procédé pour lire des données optiques sur une carte à données en utilisant le système de lecture selon la revendication 2, caractérisé en ce que les lignes absorbantes (30, 32, 34) constituent des moyens pour corriger un désalignement par le suivi de ces lignes au moyen d'un système asservi.

## Patentansprüche

1. Optisches Datenkartenlesesystem mit einer Datenkarte (15) mit parallelen Datenpfaden auf der Datenkarte, einer Kartentransportvorrichtung (48,57) zum Bewegen der Karte in einer ersten Richtung, einer Strahlenquellenvorrichtung (40) zum Richten eines Strahlungsstrahls auf die Datenpfade, einer Strahldetektorvorrichtung (17;21;50) zum Lesen des Strahlungsstrahles nach Auftreffen auf die Karte, und Bewegungsvorrichtungen (54,56) zum Fortbewegen der Datenkarte relativ zu der Strahlenquelle und der Strahldetektorvorrichtung in einer zweiten Richtung senkrecht zu der ersten Richtung, dadurch gekennzeichnet, daß aneinanderliegende Reihen von Speicherzellen (35;43,45,47) auf der Datenkarte (15) in sich in einer ersten Richtung erstreckenden parallelen Bändern (10,36,38) angeordnet sind, wobei die Reihen von Speicherzellen sich senkrecht dazu in einer rechteckigen Anordnung erstrecken, daß jede Speicherzelle (35;43,45,47) ein einziges Datenbit in annähernd der Größe eines Laserstrahldurchmessers halten kann, daß jedes Band von Reihen von Speicherzellen (35;43,45,47) von benachbarten Bändern (10,36,38) getrennt ist, daß die Strahldetektorvorrichtung (17;21;50) eine lineare Anordnung von Detektorzellen (51,53,55) aufweist, wobei die Anordnung eine Länge besitzt, die größer als eine Datenreihe ist, und eine Breite, die nicht größer als die Breite einer Speicherzelle ist, daß die Strahldetektorvorrichtung (17;21;50) Daten in einer Reihe plus einige Daten aus Reihen in benachbarten Bändern abbildet, und daß diese Speicherzelle durch mehr als eine Detektorzelle (51,53,55) abgebildet wird derart, daß die in einer Reihe enthaltenen Datenbits gleichzeitig gelesen werden können und aneinanderliegende Reihen nacheinander gelesen werden können.

2. System nach Anspruch 1, dadurch gekennzeichnet, daß die parallelen Bänder von Daten durch parallele, absorbierende Linien (30,32,34) getrennt sind.

3. System nach Anspruch 1 oder 2, wobei jede Reihe von Datenzellen Markierungen an entgegengesetzten Enden zur Identifikation einer Reihe aufweist.

4. System nach einem der Ansprüche 1, 2 oder 3, dadurch gekennzeichnet, daß die lineare Anordnung von Detektorzellen eine CCD-Vorrichtung ist.

5. Optische Datenkarte (15), die in einem optischen Datenkartenlesesystem, insbesondere einem nach einem der Ansprüche 1 bis 4, gelesen werden kann, mit zumindest einem sich longitudinal erstreckenden Pfad, der eine Vielzahl von auf einem Substrat angeordneten Speicherzellen enthält, dadurch gekennzeichnet, daß die Speicherzellen aneinanderliegend in einer rechteckigen Anordnung (Fig. 3) angeordnet sind, daß einige der Speicherzellen Datenflecken (39) von mikroskopischer Größe aufweisen, daß die restlichen Speicherzellen leer sind, daß die Speicherzellen Spuren bilden, die in einer Richtung senkrecht zur Längserstreckung des Datenpfades lesbar sind.

6. Datenkarte (15) nach Anspruch 5, dadurch gekennzeichnet, daß zumindest ein Ende jeder Spur Flecken aufweist, die das Vorhandensein der Spur markieren.

7. Verfahren zum Lesen optischer Daten auf einer Datenkarte unter Verwendung des Lesesystems nach Anspruch 3, gekennzeichnet durch gleichzeitiges Lesen von Speicherzellen in jeder Reihe und Auswählen der festgestellten Werte nur derjenigen Speicherzellen, die zwischen den Flecken angeordnet sind, die das Vorhandensein der Reihe markieren.

8. Verfahren nach Anspruch 7, dadurch gekennzeichnet, daß jede Reihe mehrmals gelesen wird und daß die Ablesungen für ein wahrscheinlichstes Endergebnis ausgewertet werden.

9. Verfahren zum Lesen optischer Daten auf einer Datenkarte unter Verwendung des Lesesystems nach Anspruch 2, dadurch gekennzeichnet, daß die absorbierenden Linien (30,32,34) zur Schrägkorrektur durch Servospurhaltung dienen.

_Fig.1_

_Fig.4_

_Fig.2_

_Fig.3_

Fig. 5

_Fig.6_